# EUROPEAN PATENT APPLICATION

(11) **EP 0 866 634 A2**
(43) Date of publication of application: **23.09.1998**
(21) Application number: 98104701.2
(22) Date of filing: 16.03.1998
(51) Int. Cl.: H04Q 11/04, H04L 12/56, H04L 12/46

(54) **Broadcast packet transfer method in LAN emulation and an LSI device for same**

(30) Priority: 18.03.1997 JP 83447/97
(71) Applicant: NEC CORPORATION, Tokyo (JP)
(72) Inventor: Izawa, Kenji, Minato-ku, Tokyo (JP)
(74) Representative: VOSSIUS & PARTNER

(57) **Abstract**

As a method of transmitting data between a BUS (Broadcast and Unknown Server) and the circuit in a BUS device of a LAN emulation system, an AAL5-LSI (ATM Adaptation Layer 5)-LSI device is provided that is equipped with an interface memory that can store correlations between reception VPI/VCI (Virtual Path Identifier/Virtual Channel Identifier) and transmission VPI/VCI of broadcast packet data, these correlations being set from the BUS. The destinations of broadcast packets received from the circuit are determined based on this interface memory, and according to these judgment results, broadcast packets received from the circuit are transmitted by return directly to the circuit side by the AAL5-LSI and not via the BUS. This BUS sets the correlation between reception VPI/VCI and transmission VPI/VCI in the interface memory when connection is established with a LEC (LAN Emulation Client) and cancels the correlation when the connection is discontinued.

## Description

The present invention relates to a broadcast packet transfer method and a device for performing the method in LAN Emulation for a Local Area Network (hereinbelow abbreviated as 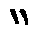 LAN*"*) of an Asynchronous Transfer Mode (hereinbelow abbreviated as 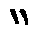 ATM*"*) system; and particularly to a method of high-speed transmission of broadcast packets by means of Broadcast-and-Unknown Server (hereinbelow abbreviated as 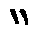 BUS*"*) in LAN Emulation and a Large Scale Integration (LSI) device used for realizing such a transmission method. In addition, in this specification, broadcast packets include not only broadcast packets sent to all other nodes or terminals, but also multicast packets or unknown packets for searching a specific group destination or specific server.

LAN Emulation methods have been proposed as a method for accommodating an existing LAN in an ATM network, and specifications for such methods have been published by the LAN Emulation SWG Drafting Group as the LAN Emulation Over ATM Specifications, Version 1.0; ATM Forum 94-0035R4.

This LAN Emulation method is made up of clients referred to as LAN Emulation Clients (hereinbelow abbreviated as 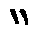 LEC*"*) and servers such as LAN Emulation Servers (hereinbelow abbreviated as LES) or BUS.

LES are mainly servers that find the ATM address necessary for communication based on Media Access Control (MAC) addresses of Ethernet interface hardware. A BUS mainly governs transmission functions of broadcast packets including multicast packets and unknown packets in an existing LAN medium such as Ethernet.

Three types of methods exist for transmitting broadcast packets. In the first, packets are transmitted to all terminals/nodes at once using as addresses unique node numbers for every node that are added when producing addresses for transmission, the addresses are consulted at the transmission destinations, and packets are taken in only at terminals/nodes having a node number that matches an added address. In the second method, addresses are all made 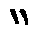 1*"* in order that all terminals/nodes accept a particular broadcast packet for such purposes as searching for a location within an ATM-LAN system that provides a specific service. In the third method, all addresses are made 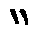 0*"* in order that a particular broadcast packet is transmitted only to terminals/nodes that are connected by a direct physical link to the terminal/node of origination in order that the connection setting process recognize the connection state of the system.

In an ATM-LAN system, connections in the ATM communication network are basically set in the ATM layer, and as a result, in a case in which a terminal connected to this ATM-LAN system 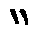 seeks a host that provides a particular service in order to use that service,*"* it must depend on the network-side functions. In this regard, Japanese Patent Laid-open No. 202905/95 discloses a design having the purpose of increasing the independence of terminals from the network-side functions.

However, broadcast packet transmission methods by means of LAN emulation of the prior art have been constructed such that broadcast packets, multicast packets, and unknown packets are transmitted only by way of a BUS, and BUS transmission performance in such cases could not be expected to surpass a level of 10,000 packets/second.

In terms of hardware, the transmission capacity of the internal bus of the BUS device has presented a bottleneck, while the LSI drive and BUS performance presented problems in terms of software; and in order to achieve high-speed transmission of the broadcast packets, there has been a need to dramatically improve the transmission capacity of the internal bus and the data processing speed of the BUS. However, improving the transmission performance of the internal bus and the data processing speed of the BUS was exceedingly difficult given the construction of prior-art systems.

The first object of the present invention is to provide a method that enables high-speed transmission of broadcast packets in LAN emulation without regard to the performance of the internal bus or data processing speed within a BUS device.

The second object of the present invention is to provide a LSI device that can realize high-speed transmission of broadcast packets.

To achieve the above-described objects, the broadcast packet transmission method of the present invention is provided with an interface memory that is within a data transmitting means between a BUS and circuit and that can store correlations between reception VPI/VCI (Virtual Path Identifiers/Virtual Channel Identifiers) and transmission VPI/VCI of broadcast packet data that are set from the BUS; and by means of VPI/VCI received from the circuit, this interface memory is consulted to determine the transmission destination of the packet data; and by means of the judgment results, the broadcast packets received from the circuit are transmitted to higher-ranking software or to the address of the transmission VPI/VCI.

In addition, the BUS sets the correlation between reception VPI/VCI and transmission VPI/VCI in the interface memory when connection is established with a LAN emulation client (LEC), and cancels this correlation when the connection is discontinued.
The LSI device of the present invention that is used to realize the above-described method is an ATM Adaptation Layer 5 (hereinbelow abbreviated 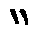 AAL5*"*) -LSI device having an interface with a BUS, and further, has an interface memory in which a transmission VPI/VCI corresponding to the reception VPI/VCI of the BUS can be set for the BUS.

This AAL5-LSI device places in correspondence:
one transmission VPI/VCI for every Emulated LAN (hereinbelow abbreviated 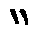 ELAN*"*) that is designated by Virtual Channel Connections (hereinbelow abbreviated 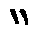 VCC*"*) of multicast forwarding using point-to-multipoint Switched Virtual Connections (hereinbelow abbreviated 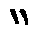 SVC*"*) set from the BUS; and
a plurality of reception VPI/VCI for every LEC designated by means of VCC of multicast sending that uses point-to-point SVC from a plurality of LEC, with ELAN as units; and
sets to the interface memory a correlation whereby one transmission VPI/VCI for every ELAN to which LEC belong corresponds to a number N of reception VPI/VCI for every LEC.

In addition, when broadcast packet data are received, the AAL5-LSI consults the interface memory and transmits the data directly to the circuit by means of the transmission VPI/VCI if the correlation between reception VPI/VCI and transmission VPI/VCI has been set for that data, and passes the data on to higher-ranking software if the correlation has not been set.

By means of the above-described method and device of the present invention, broadcast packets that would otherwise have been transmitted by the BUS in ELAN units can instead be directly transmitted by return by the AAL5-LSI device and not transmitted by the BUS. As a result, the transmission speed is less constrained by the properties of the internal bus or BUS and high-speed transmission can be achieved that is several tens of times faster than methods of the prior art.

The above and other objects, features, and advantages of the present invention will become apparent from the following description referring to the accompanying drawings which illustrate an example of a preferred embodiment of the present invention.
Fig. 1 is a block diagram showing the construction of one embodiment of the present invention;
Fig. 2 illustrates the hardware functions of a BUS device;
Fig. 3 shows one example of the content of the interface memory with a BUS in an AAL5-LSI;
Fig. 4 shows an example of the connections between an ELAN and a BUS; and
Fig. 5 shows an example of the settings of a BUS interface memory.

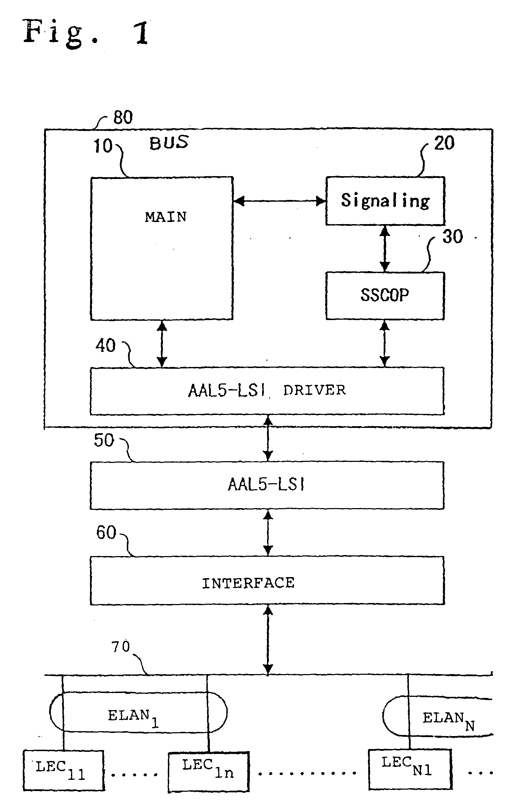

In Fig. 1, BUS device 80 is made up of BUS main part 10, signaling 20, Service Specific Connection Oriented Protocol (hereinbelow abbreviated 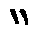 SSCOP*"*) 30, AAL5-LSI driver 40; AAL5-LSI 50, circuit interface 60, and physical circuit 70.

Signaling 20 sets point-to-point Switched Virtual Connection (hereinbelow abbreviated 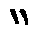 SVC*"*) or point-to-multipoint SVC, and has an interface with BUS 10.

SSCOP 30 is one type of layer-2 procedure stipulated by recommendation Q2110 as Service Specific Connection Oriented Protocol (SSCOP) of the B-ISDN ATM Adaptation Layer and is the protocol that governs the resend function when data are abandoned or when an error exists in the data content.

AAL5-LSI driver 40 is a driver having an interface function between AAL5-LSI and higher-ranking software.

AAL5-LSI 50 is an LSI for data transmission service having the functions of coupling cells and packeting when receiving cells and dividing packets into cells and transmitting when sending packets.

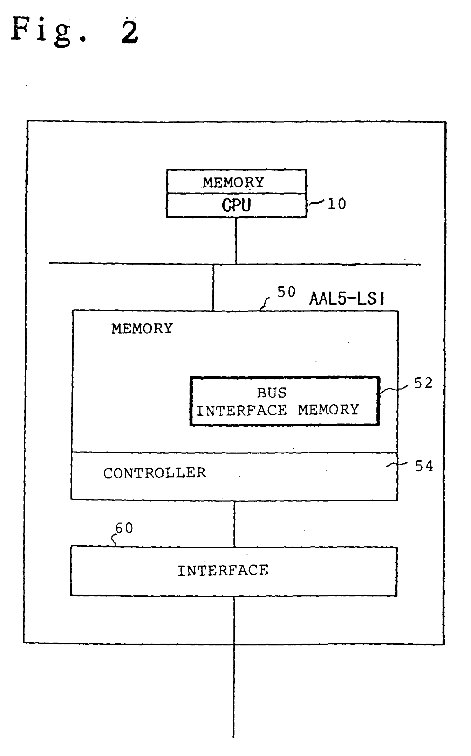

Regarding the hardware functions of a BUS device, as shown in Fig. 2, a CPU, a memory that the CPU accesses (CPU memory), and AAL5-LSI are connected in the internal bus. AAL5-LSI includes an AAL5-LSI control section and an AAL5-LSI memory that incorporates the BUS interface-memory of this invention, and in addition, is connected to an optical cable by way of a circuit interface. BUS 10, Signaling 20, SSCOP 30, and AAL5-LSI driver 40 of Fig. 1 are stored in CPU memory, and the CPU uses these components to communicate with AAL5-LSI via the internal bus. The correlation between the reception VPI/VCI from the BUS and the transmission VPI/VCI is stored in the BUS interface-memory.

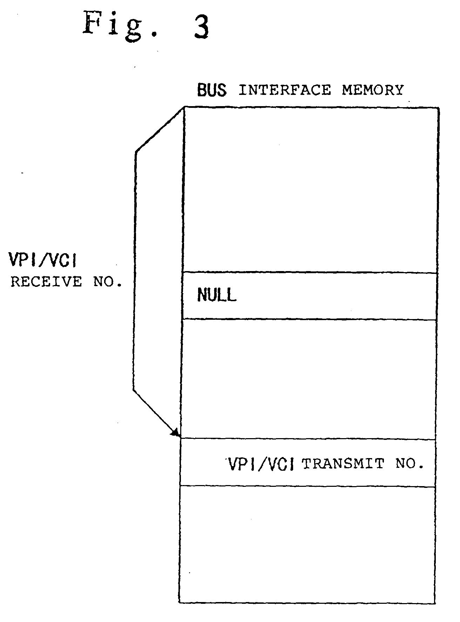

Explanation is next presented regarding the operation of this embodiment with reference to Fig. 3. Upon receiving data from the circuit, AAL5-LSI 50 refers to the BUS interface-memory, and if 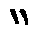 NULL*"* when indexed by the reception VPI/VCI number, treats the data as lacking a request to transmit the data from the BUS to the circuit and passes it on to the higher-ranking software; and if not 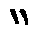 NULL,*"* interprets this as a transmission request from the BUS to send the data to the circuit taking that value as the transmission VPI/VCI, and directly sends the data to the circuit using the transmission VPI/VCI.

As for an actual case when not 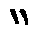 NULL,*"* the LEC transmits broadcast packets to the BUS using connections of multicast send VCC (Virtual Channel Connection), and the BUS transfers these broadcast packets to all LECs included within the ELAN using the multicast forward VCC connections.

Here, multicast send VCC is point-to-point SVC set in the BUS direction from the LEC, and multicast forward VCC is point-to-multipoint SVC set in the LEC direction from the BUS.

When multicast forward VCC is established with an LEC, the BUS sets the correlation between reception VPI/VCI values and the transmission VPI/VCI values in the BUS interface memory via the AAL5-LSI driver, and in addition, sets 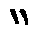 NULL*"* values in the BUS interface memory via the AAL5-LSI driver in order to cancel this correlation when multicast forward VCC is cut off.

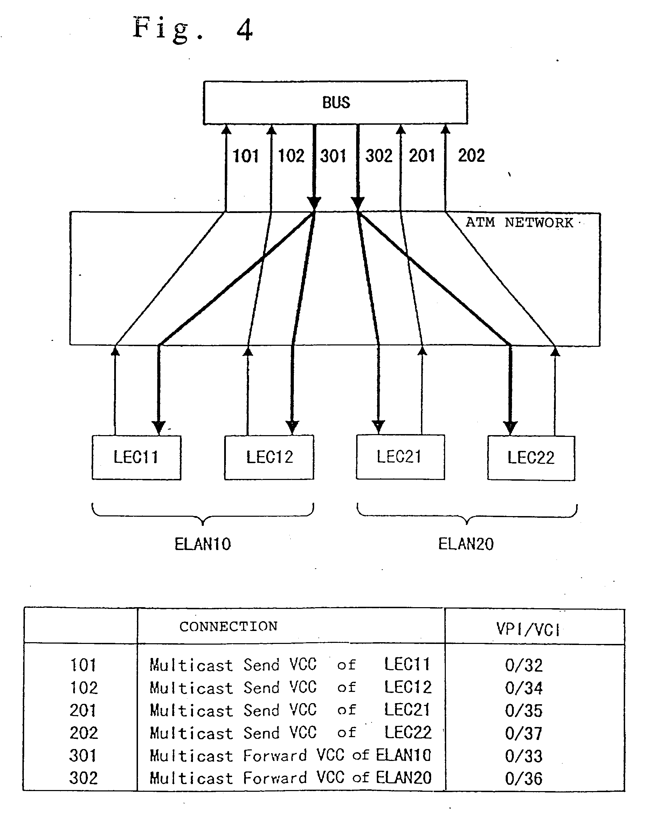

In Fig. 4, if LEC 11 and LEC 12 are included within ELAN 10, LEC 21 and LEC 22 are included within ELAN 20, and connections 101, 102, 201, and 202 with the BUS are multicast send VCC with LEC 11, LEC 12, LEC 21, and LEC 22, respectively, then connections 301 and 302 are multicast forward VCC toward LECs belonging to ELAN 10 and ELAN 11, respectively.

Connection 301 is a point-to-multipoint SVC set from the BUS toward LEC 11 and LEC 12, which belong to ELAN 10, and connection 302 is a point-to-multipoint SVC set from the bus toward LEC 21 and LEC 22, which belong to ELAN 20.

In this case, 0/32, 0/34, 0/35, 0/37, 0/33, and 0/36 are concrete examples of VPI/VCI values for connections 101, 102, 201, 202, 301, and 302, respectively.

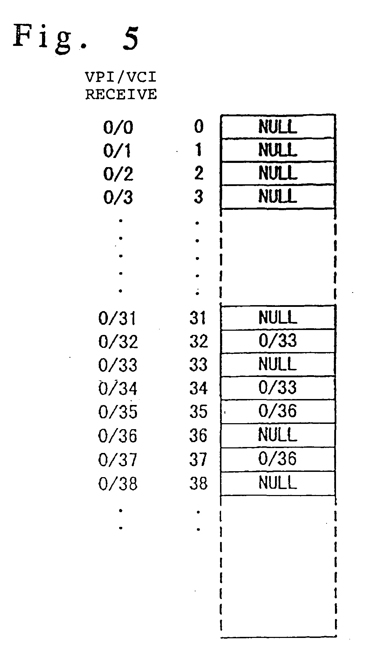

The method of using the BUS interface memory is next explained with reference to Fig. 5 for a case in which the ELAN and BUS are connected as shown in Fig. 4. For a case in which the reception VPI/VCI is 0/i, the index value of the BUS interface memory is i and the initial values of the BUS interface memory are all 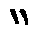 NULL*"* values.

The BUS sets point-to-multipoint SVC toward LEC 11 when connection 101 is set. At this time, the transmission VPI/VCI of connection 301 is set to 0/33 at a position corresponding to index value 32 of the BUS interface memory. The BUS sets point-to-multipoint SVC toward LEC 12 when connection 102 is set, and transmission VPI/VCI is set to 0/33 at a position corresponding to index value 34 of the BUS interface memory.

The settings relating to ELAN 10 are also set by the above-described process.

In the same way, transmission VPI/VCI is set to 0/36 at positions corresponding to index values 35 and 37 of the BUS interface memory, thereby effecting settings relating to ELAN 20.

When the connection is cut off, the BUS sets the corresponding BUS interface memory to 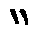 NULL.*"* For example, when connection 101 is cut off, the position corresponding to index value 32 of BUS interface memory is set to 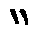 NULL.*"*

AAL5-LSI, which has an interface with the BUS according to the present invention, refers to the BUS interface memory and transmits data received with reception VPI/VCI at 0/32 and 0/34 at a transmission VPI/VCI of 0/33. In the same way, data received with reception VPI/VCI of 0/35 and 0/37 are transmitted with transmission VPI/VCI at 0/36. Moreover, when data are received for which positions in the BUS interface memory corresponding to reception VPI/VCI are set to 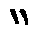 NULL,*"* these data are sent to the AAL5-LSI driver, i.e., the higher-ranking software.

It is to be understood that variations and modifications of the broadcast packet transmission method in LAN emulation and LSI device for realizing the method that are disclosed herein will be evident to those skilled in the art.

## Claims

1. A method for transmitting broadcast packet data between a Broadcast-and-Unknown Server (hereinbelow abbreviated "BUS") and a network of an Asynchronous Transfer Mode (hereinbelow abbreviated "ATM") in Local Area Network (hereinbelow abbreviated "LAN") Emulation, comprising the steps of;
providing a correlation table between reception Virtual Path Identifiers or Virtual Channel Identifiers (hereinbelow abbreviated "VPI/VCI") and transmission VPI/VCI of broadcast packet data;
detecting VPI/VCI of broadcast packet data received through the network of the ATM;
referring said detected VPI/VCI to said correlation table;
setting said broadcast packet data with corresponding transmission VPI/VCI set in said table; and transmitting the broadcast packet data directly to the network.

2. A method according to claim 1, wherein the correlation between the reception VPI/VCI and transmission VPI/VCI is set in the table by BUS when connection is established with a LAN Emulation Client (hereinbelow abbreviated "LEC"), and the correlation is canceled when the connection is discontinued.

3. A method according to claim 1 or 2, wherein the correlations are placed by BUS which provides every one transmission VPI/VCI using multicast forwarding Virtual Channel Connection (hereinbelow abbreviated "VCC") for each Emulated LAN (hereinbelow abbreviated "ELAN"), in correspondence with a plurality of reception VPI/VCIs from LAN Emulation Clients (hereinbelow abbreviated "LEC") of each ELAN using multicast sending VCCs.

4. A method according to claim 3, wherein said multicast sending VCC is point-to-point Switched Virtual Connection (hereinbelow abbreviated "SVC") from each LEC to the BUS; and said multicast forwarding VCC is point-to-multipoint SVC from the BUS to all LECs of each ELAN.

5. A method according to claim 1, 2, 3 or 4, wherein, if said correlation has not been set in the table, the broadcast packet data is passed on to higher-ranking software.

6. An apparatus for transmitting broadcast packet data between a Broadcast-and-Unknown Server (hereinbelow abbreviated "BUS") and a network of an Asynchronous Transfer Mode (hereinbelow abbreviated "ATM") in Local Area Network (hereinbelow abbreviated "LAN") Emulation, wherein said BUS comprises; a driver for driving said AAL5 with an interface between said AAL5 and higher-ranking software; a signaling circuit for setting point-to-point Switched Virtual Connection (hereinbelow abbreviated "SVC") or point-to-multipoint SVC; and a circuit according to Service Specific Connection Oriented Protocol (hereinbelow abbreviated "SSCOP");
said apparatus comprising:
an interface between the BUS and the network of the ATM; and
a device of ATM Adaptation Layer 5 (hereinbelow abbreviated "AAL5") having an interface memory for storing a correlation table between reception Virtual Path Identifier/Virtual Channel Identifiers (hereinbelow abbreviated "VPI/VCI") and transmission VPI/VCI, and sending received broadcast packet data back to the ATM network.

7. An apparatus according to claim 6, wherein said device of AAL5 is built in a Large Scale Integration (hereinbelow abbreviated "AAL5-LSI").
